# EUROPÄISCHE PATENTSCHRIFT

(11) **EP 1 507 998 B1**
(45) Veröffentlichungstag und Bekanntmachung des Hinweises auf die Patenterteilung: **10.01.2007**
(21) Anmeldenummer: 03752715.7
(22) Anmeldetag: 24.04.2003
(51) Int. Cl.: F16M 11/04, B66F 11/04

(54) **GERÄTEKRAN, INSBESONDERE KAMERAKRAN**
DEVICE CRANE, ESPECIALLY CAMERA CRANE
GRUE D'APPAREIL, NOTAMMENT GRUE DE CAMERA

(30) Priorität: 22.05.2002 DE 10222663
(43) Veröffentlichungstag der Anmeldung: 23.02.2005
(73) Patentinhaber: Sachtler GmbH & Co. KG, 85386 Eching (DE)
(72) Erfinder: HEIN, Dieter, 86949 Windach (DE)
(74) Vertreter: HOFFMANN EITLE
(86) Internationale Anmeldenummer: PCT/EP2003/004274
(87) Internationale Veröffentlichungsnummer: WO 2003/098095

(56) Entgegenhaltungen:
- DE-A- 2 657 692
- DE-U- 29 816 565
- DE-U- 29 907 704
- DE-U- 29 916 225
- FR-A- 2 325 598
- US-A1- 2002 031 348

## Beschreibung

### Technisches Gebiet

Die Erfindung bezieht sich auf das Gebiet der Hebezeuge und insbesondere auf das Gebiet der Krantechnik in Verbindung mit der gesteuerten Führung von Geräten im Raum. Insbesondere bezieht sich die Erfindung auf die Führung einer Kamera im Raum durch Verschwenken eines Kranauslegers, an dessen einem Ende eine Kamera angebracht ist.

### Stand der Technik

Ein derartiger Gerätekran ist aus DE 298 16 565 U1, DE 299 07 704 U1 und DE 299 16 225 U1 bekannt. Mit einem dort beschriebenen Kamerakran ist eine Führung der Kamera im Raum durch die Schwenkbewegung eines Kranauslegers möglich, wobei durch eine Parallelogrammführung die Kameraaufnahmeplatte bei der Führung durch den Raum in einer bestimmten, aber auch horizontalen Ausrichtung gehalten werden kann. Es besteht aber auch die Möglichkeit, die im Parallelogrammsystem benutzte Seilführung zu verändern, so dass keine Parallelogrammeinstellung mehr vorhanden ist. Es kann die Kameraaufnahmeplatte in der einen oder anderen Richtung hinsichtlich des Einstellwinkels voreingestellt werden.

Aus der US 2002/031348 A ist ein Kamerakran mit einem Ausleger und einer Kamerahalteeinrichtung bekannt, die in einem Kragarm verschiebbar bewegt werden kann. Dieser Kragarm wird durch Zugseile gehalten und ist über ein Gelenk mit dem Ausleger verbunden. Um dieses Gelenk kann der Kragarm über einen Zylinder verschwenkt werden. Das vorerwähnte Gelenk ist vorzugsweise mit Teflonbeilagscheiben und Nadellagern versehen, um eine reibungsfreie und ungedämpfte Schwenkbewegung möglich zu machen. Zur Vermeidung von seitlichen Schwingungen ist die Kamera auf einer in dieser Richtung gedämpft gelagerten Auflageplatte befestigt.

Aus der FR 2 325 598 A ist ein Lastkran bekannt, dessen Ausleger von einem Zugseil gehalten wird. Am oberen Ende des Auslegers befindet sich ein Kameraaufnahmeelement. Die Kamera hängt freischwingend über eine Achse in Lagern. Dort kann die Kamera frei pendeln und sich immer senkrecht nach unten ausrichten, wenn der Ausleger in seiner Neigung verändert wird. Es liegt also keine Verbindung mit dem Zugseil vor. Auf der vorgenannten Achse befindet sich eine Dämpfungseinrichtung, die mit einer viskosen Masse wirksam ist. Durch diese Dämpfungseinrichtung werden Stöße und ruckartige Bewegungen im Hinblick auf die Selbstausrichtung der Kamera kompensiert. Aufgrund einer Schwenkbewegung des Auslegers kommt es zu einer Verschwenkung der Kamera über Bügel und die vorgenannte Achse durch die Schwerkraft der Kamera. Diese sich aus der Schwenkbewegung des Auslegers automatisch ergebende Verschwenkung der Kamera wird durch die Dämpfungseinrichtung derart abgebremst, dass der Kranführer in der Kabine am Bildschirm das Kameraaufnahmebild vibrationsfrei beobachten kann.

### Darstellung der Erfindung

Es ist das technische Problem (Aufgabe) der vorliegenden Erfindung, bei einem Gerätekran, insbesondere einem Kamerakran, der eingangs genannten Art die Führung des Gerätes beziehungsweise der Kamera im Raum zu präzisieren.

Dieses Problem wird durch einen Gerätekran, insbesondere einen Kamerakran, gelöst, welcher eine Kranstütze und einen an einer ersten Anlenkstelle schwenkbar an dieser angelenkten Kranausleger aufweist. An einem Ende des Kranauslegers ist an einer zweiten Anlenkstelle ein Geräteaufnahmeelement angelenkt, an dem an einer dritten Anlenkstelle, die von der zweiten Anlenkstelle beabstandet ist, ein Zugelement angelenkt ist, das von dort zur Kranstütze geführt ist, und dort an einer vierten Anlenkstelle angelenkt ist, die von der ersten Anlenkstelle beabstandet ist. Im Schwenkbereich des Geräteaufnahmeelements und im Bereich der zweiten Anlenkstelle ist eine Bewegungsdämpfungseinrichtung angeordnet, durch welche die Schwenkbewegung des Geräteaufnahmeelements um die zweite Anlenkstelle dämpfbar ist.

Durch diese Lösung wird verhindert, dass insbesondere bei einem langen Kranausleger und somit einem langen Zugelement eventuell auftretende Längenänderungen des Zugelements aufgrund der Belastung durch ein schweres Gerät dieses unerwünschte Schwingungen ausführt. Selbst wenn ein vorgerecktes Zugseil verwendet wird, sind Längenänderungen bei relativ hohen Belastungen bei einem solchen Kran kaum zu vermeiden. Außerdem führt die Verwendung eines dehnungsfreien Zugseils zu einem nicht unerheblichen Kostenaufwand. Dies kann erfindungsgemäß vermieden werden, weil die Dehnungen des Zugelements beziehungsweise des Zugseils durch die Dämpfungseinrichtung isoliert werden und somit das Gerät ausschließlich mit der gewünschten Bewegung durch den Raum geführt werden kann.

Bevorzugt sind mehrere Dämpfungselemente vorhanden, die gezielt in Abhängigkeit vom Gewicht des Geräts zubeziehungsweise abgeschaltet werden können. Dadurch kann das Ausmaß der Dämpfung an das jeweilige Kameragewicht und an die Schwingungsintensität angepasst werden, die von der Dehnung des Zugelements an sich und der Dehnung in Abhängigkeit von der Länge des Zugelements abhängig ist. Die Bewegungsdämpfungseinrichtung ist dämpfbar.

Zur Realisierung der Dämpfungswirkung auf einfache Weise ist es vorgesehen, an sich bekannte Dämpfungselemente einzusetzen, die aus einer Innenscheibe und einer Außenscheibe bestehen, welche Innenscheibe sich unter Zwischenschaltung einer viskosen Flüssigkeit innerhalb der Außenscheibe drehen kann. Die Innenscheibe sitzt fest auf einer Achse, die sich mit dem Geräteaufnahmeelement dreht. Die Außenscheibe ist auslegerseitig sperrbar. Wenn die Außenscheibe gesperrt ist, funktioniert die Dämpfungsscheibe als Dämpfungselement. Wenn diese Sperrung nicht vorliegt, so drehen sich Innenscheibe und Außenscheibe gemeinsam ohne eine Dämpfungswirkung.

### Kurze Beschreibung der Zeichnungen

In den Zeichnungen ist ein Ausführungsbeispiel rein schematisch dargestellt.
- Fig. 1: eine perspektivische Ansicht eines Kamerakrans gemäß der Erfindung
- Fig. 2: eine perspektivische Ansicht der Seite der Kranstütze, an der das Zugseil angebracht ist;
- Fig. 3: eine perspektivische Ansicht der anderen Seite der Kranstütze, an der das Zugseilende befestigt ist;
- Fig. 4: eine perspektivische Darstellung des Kranauslegerendes mit der Kameraaufnahmeplatte;
- Fig. 5: eine schematische Seitenansicht des in Fig. 4 dargestellten Kranauslegerendes; und
- Fig. 6: eine Schnittansicht entlang der Linie VI-VI in Fig. 5.

### Beschreibung eines Ausführungsbeispiels

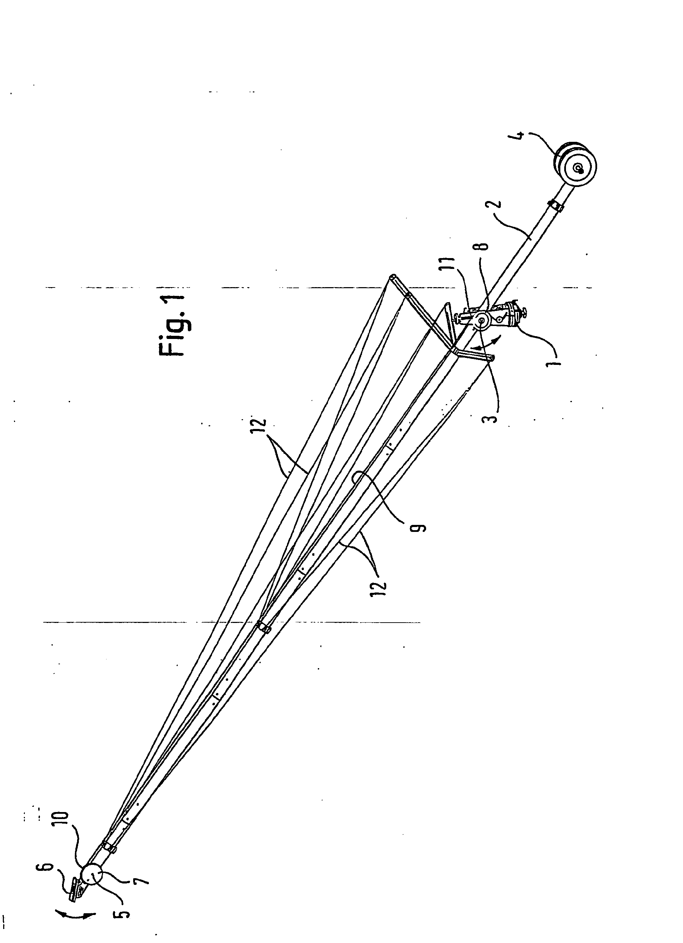

Ein in Fig. 1 dargestellter Kamerakran umfasst eine Kranstütze 1, die in Fig. 1 nur teilweise dargestellt ist. Der untere Teil der Kranstütze 1 ist hier nicht dargestellt, kann aber in Form eines Tripods ausgeführt sein. Weiterhin umfasst der Kamerakran einen Kranausleger 2, der an einer ersten Anlenkstelle 3 an der Kranstütze 1 schwenkbar gelagert ist. Am in der Darstellung rechten Ende des Kranauslegers 2 befindet sich ein Gegengewicht 4. Am entgegengesetzten Ende des Kranauslegers 2 ist an einer zweiten Anlenkstelle 5 eine als Kameraaufnahmeelement ausgebildete Kameraaufnahmeplatte 6 schwenkbar gelagert. Zusammen schwenkbar mit der Kameraaufnahmeplatte 6 ist hier als Ausführungsbeispiel (auf das die Erfindung nicht beschränkt ist) eine Seilscheibe 7 angeordnet, deren Zentrum sich im Bereich der zweiten Anlenkstelle 5 befindet. Ohne eine Beschränkung auf dieses Ausführungsbeispiel befindet sich eine gleiche Seilscheibe 8 an der ersten Anlenkstelle 3, so dass deren Zentrum an dieser Anlenkstelle angeordnet ist, die zugleich Schwenkachse des Kranauslegers 2 ist. Zwischen diesen Scheiben 7 und 8 verläuft ein Zugseil 9 derart, dass an der tangentialen Anlaufstelle des Zugseils 9 am Umfang der Seilscheiben 7 und 8 im Bereich der Kameraaufnahmeplatte 6 eine dritte Anlenkstelle 10 und im Bereich der Schwenklagerung des Kranauslegers eine vierte Anlenkstelle 11 gebildet wird. Wenn dieses Zugseil 9, das zugleich Steuerseil ist, parallel zum Kranausleger 2 verläuft, so bildet der Kranausleger zusammen mit dem Zugseil 9 und den Anlenkstellen 3, 5, 10, 11 ein Parallelogrammsystem derart, dass beim Verschwenken des Kranauslegers 2 die Kameraaufnahmeplatte 6 entweder in einer exakt horizontal ausgerichteten Lagestellung oder aber in einer bestimmten Neigungsstellung gehalten werden kann, wenn die Kameraaufnahmeplatte 6 mittels des Kranauslegers 2 bei dessen Verschwenken in der Kranstütze 1 im Raum bewegt wird.

Der Kranausleger 2 kann dann relativ leichtgewichtig ausgeführt werden, wenn dieser durch Seilverstrebungen 12 versteift ist. Außerdem kann die Länge des Kranauslegers 2 verändert werden, in dem beispielsweise der Kranausleger teleskopierbar ist oder aber der Kranausleger 2 aus mehreren Teilstücken besteht, die ineinander gesteckt sind, so dass Verkürzungen beziehungsweise Verlängerungen vorgenommen werden können. Dabei werden die Seilverstrebungen 12 entsprechend umgehängt und es wird auch das Zugseil 9 in seinem Verlauf entsprechend angepasst, d. h. verkürzt oder verlängert.

Wenn im Zusammenhang mit der Kranauslegerlängenveränderung von einem Teleskopausleger die Rede ist, so schließt diese Ausdrucksweise auch die vorerwähnte Steckverbindung ein.

Die Seilscheiben 7 und 8 müssen nicht, können aber drehbar sein, wobei die Seilscheibe 8 bevorzugt um ihre Achse drehbar ist. Die Seilscheibe 7 ist normalerweise mit der Kameraaufnahmeplatte 6 drehbar.

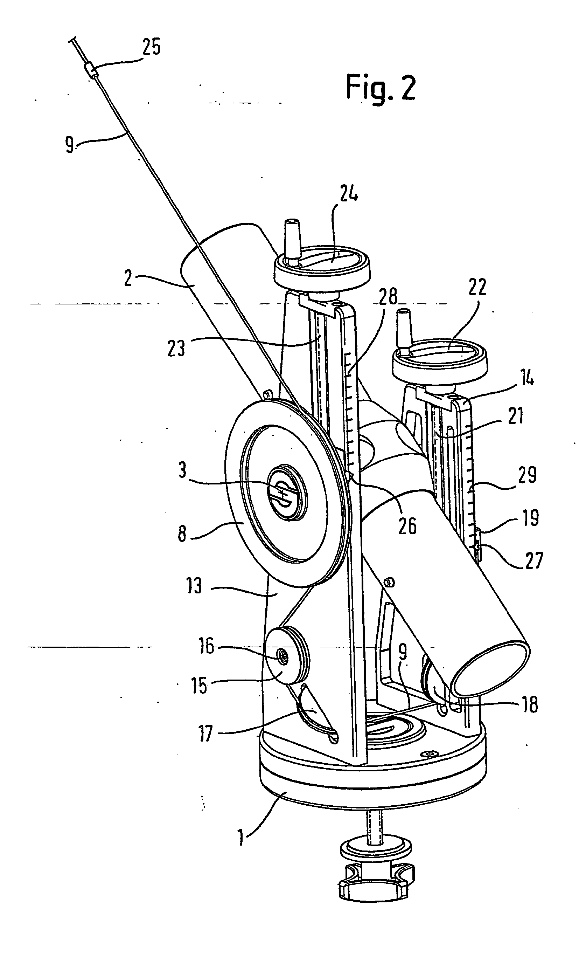

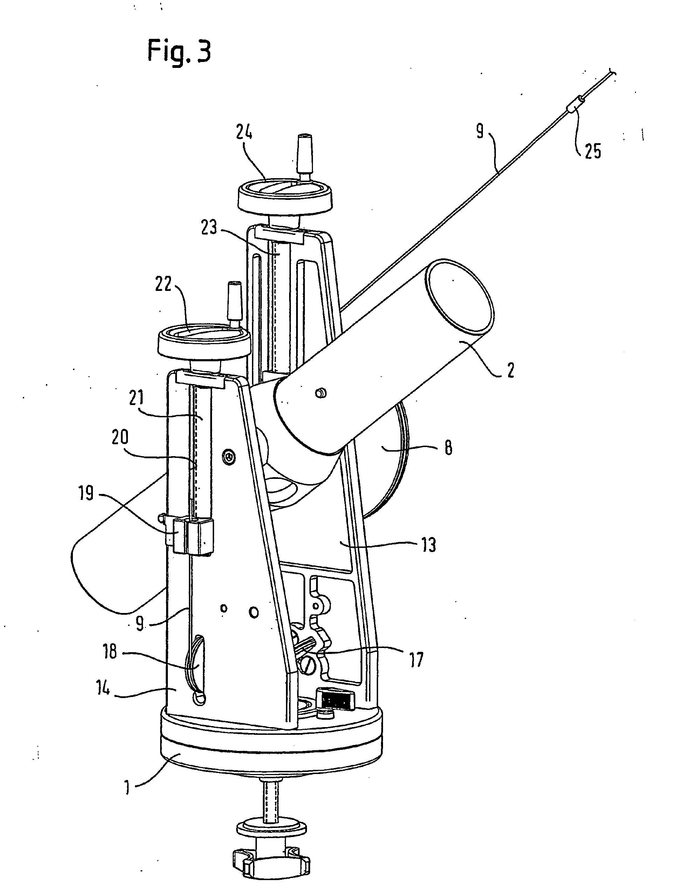

Die in Fig. 2 isoliert dargestellte Kranstütze ohne Untergestell verdeutlicht nur einen Teil des Kranauslegers 2. Fig. 2 zeigt aber deutlicher die Einzelheiten als Fig. 1, insbesondere die Seilscheibe 8 mit der ersten Anlenkstelle 3, die in der Schwenkachse des Kranauslegers 2 liegt und die bei Einstellung des Parallelogrammsystems mit der Achse der Seilscheibe 8 zusammenfällt. Deutlich erkennbar ist auch das Zugseil 9, das von der nicht dargestellten Seilscheibe 7 kommend teilweise um die Seilscheibe 8 verläuft und weitergeführt ist, wobei das Seilende an der Kranstütze 1 befestigt ist. Dies kann grundsätzlich an derselben Seite der Kranstütze vorgesehen sein. Hier befindet sich die Seilscheibe 8 auf der einen Seite der Kranstütze und das festgelegte Ende des Zugseils 9 auf der anderen Seite der Kranstütze, wobei eine Hauptteilstütze 13 und eine Nebenteilstütze 14 vorgesehen ist. Obwohl das Festlegen des Seilendes an der Kranstütze 1 auch auf derselben Seite, d. h. auf der Seite der Hauptteilstütze 13 vorgesehen sein kann, ist hier eine aufgesplittete Lösung dargestellt, bei der das Zugseil 9 teilweise um die Seilscheibe 8 geführt ist und von dort teilweise um eine Umlenkscheibe 15 geführt ist. Die Drehachse 16 dieser Umlenkscheibe 15 verläuft parallel zur Achse der Seilscheibe 8. Von der Umlenkscheibe 15 verläuft das Zugseil 9 teilweise um eine Umlenkscheibe 17, deren Achse senkrecht zur Achse 16 der Umlenkscheibe 15 umläuft. Von dort verläuft das Zugseil 9 von der Hauptteilstütze 13 zur Nebenteilstütze 14 und ist in dieser nochmals um eine weitere Umlenkscheibe 18 geführt, die auch aus Fig. 3 ersichtlich ist. Von dort verläuft das Zugseil 9 zu einem eine Raststelle bildenden Einhängelement 19. Dieses Einhängelement 19 ist in einer Aussparung 20 der Nebenteilstütze 14 verschiebbar gelagert, und zwar in einer Richtung, die dem Verlauf des Zugseils 9 an dieser Stelle entspricht. Dieses Einhängelement 19 ist hier als Spindelmutter ausgeführt und sitzt auf einer Spindelschraube 21. Wenn diese Spindelschraube 21 mittels einer Drehhandhabe 22 gedreht wird, kann das Einhängelement 19 hinsichtlich seiner Lage in Richtung der Spindelschraube 21 verändert werden. Dies hat zur Folge, dass in der entsprechenden Richtung an dem Zugseil 9 gezogen wird. Dies hat wiederum zur Folge, dass sich die Winkelstellung der Kameraaufnahmeplatte 6 verändert. Es kann also durch diese Verstellmöglichkeit die jeweils gewünschte Winkelstellung der Kameraaufnahmeplatte 6 eingestellt werden. Bei der eingestellten Parallelogrammführung über das Zugseil 9 und den Kranausleger 2 kann beim Verschwenken des Kranauslegers dann diese jeweilige Stellung beibehalten werden. Man kann allerdings auch diese Parallelogrammführung aufgeben. Hierzu ist über ein ähnliches Spindel-Mutter-System über eine Spindelschraube 23 und eine Handhabe 24 die Lage der Seilscheibe 8 in der Hauptteilstütze 13 veränderbar und zwar in etwa in derselben Richtung wie die Verstellung des Einhängelements 19, wodurch einerseits eine exakte Einstellung des Parallelogrammsystems vorgenommen werden kann, andererseits aber auch eine Verstellung dermaßen vorgenommen werden kann, dass das Zugseil 9 mehr oder weniger das Parallelogrammsystem verlässt. Bei dieser Verstellung kommt es ebenso zu einer Veränderung.der Winkellage der Kameräaufnahmeplatte 6 aber auch zu einer gewünschten Einstellung der Änderung der Winkelstellung der Kameraaufnahmeplatte während des Verschwenkens des Kranauslegers.

Für das Einhängen des Seilendes des Zugseils 9 in dem Einhängelement 19 dient ein am Zugseil befestigtes Halte-oder Rastelement 25, das im eingehängten Zustand nicht erkennbar ist, aber durch ein im Verlauf des Zugseils 9 dargestelltes Rastelement 25, welches dann zum Tragen kommt, wenn eine Verkürzung des Kranauslegers 2 vorgenommen wird. Dann nämlich wird das Zugseil 9 über die beschriebene Umlenkeinrichtung durchgezogen und dabei das Rastelement 25 eingehängt, so dass sich ein Überschuss an Zugseil 9 ergibt, der an einer entsprechenden Stelle an der Kranstütze 2 aufgehängt werden kann, damit dieser Überschuss nicht behindert.

Die Seilscheibe 8 ist mit einem Zeiger 26 und das Einhängelement 19 mit einem Zeiger 27 versehen. Diese Zeiger 26, 27 wirken mit einer Skala 28 beziehungsweise 29 zusammen, so dass eine entsprechende sichtbare Verstellung leicht möglich ist.

Durch die Entkoppelung der Verstellung auf zwei Seiten ist eine größere Übersichtlichkeit und eine wirksamere Einstellung möglich.

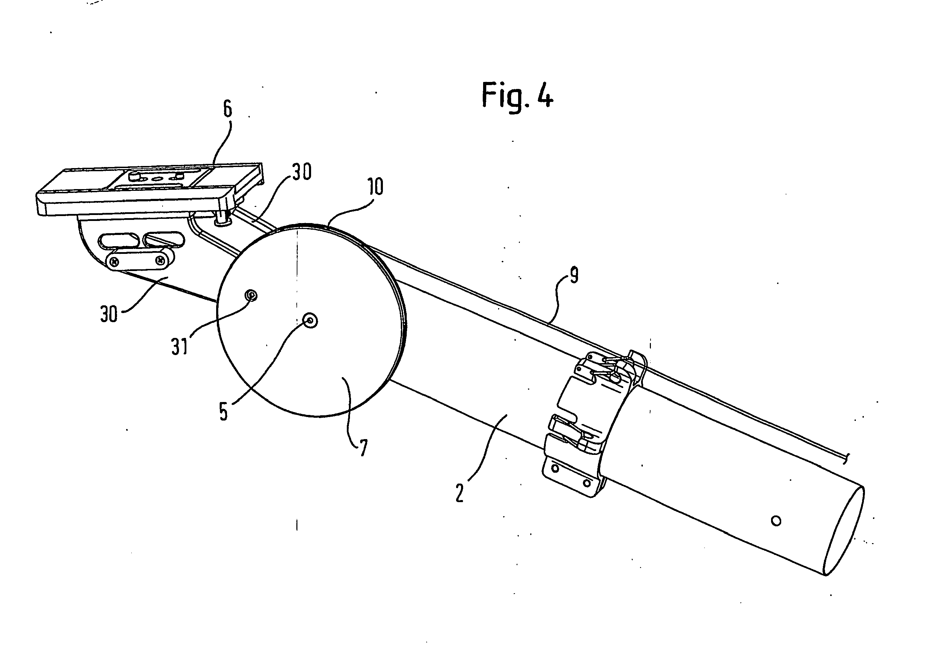

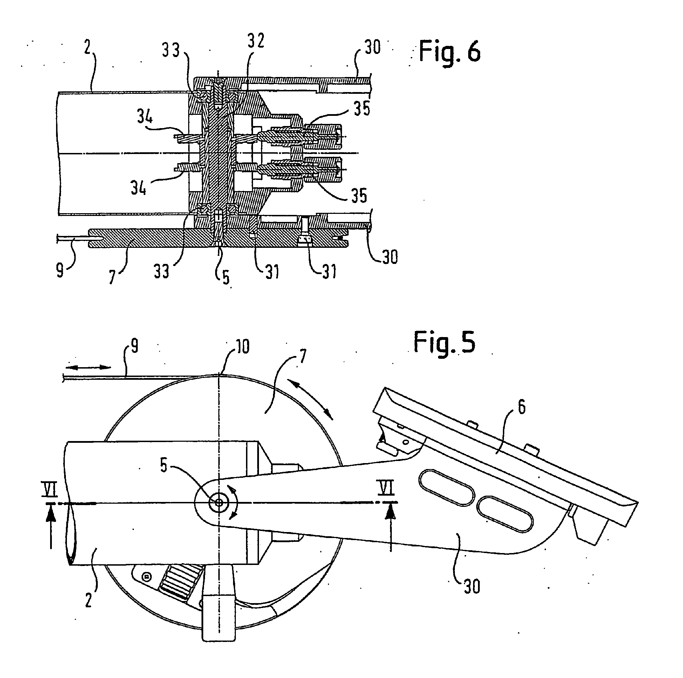

Aus Fig. 4 ist besser als aus Fig. 5 das kameraseitige Ende des Kranauslegers 2 ersichtlich, welches die Seilscheibe 7 für das Zugseil 9 zeigt mit den Anlenkstellen 5 für die Kameraaufnahmeplatte 6 und die Anlenkstelle 10 für das Zugseil 9. Kameraaufnahmeplatte 6 weist zwei Haltestege 30 auf, von denen einer mit der Seilscheibe 7 fest verbunden ist, sich also mit dieser dreht, was deutlicher aus Fig. 6 erkennbar ist durch die Verbindungselemente 31. Die Haltestege 30 sind fest mit einer Achse 32 verbunden, die in Wälzlagern 33 eines Kranauslegerendstückes gelagert ist. An dieser Achse 32 sind bei diesem Ausführungsbeispiel zwei Dämpfungselemente 34 befestigt, die als an sich bekannte Dämpfungsscheiben in der DE 2657 692 C2 dargestellt und beschrieben sind. Diese Dämpfungsscheiben bestehen aus einer Innenscheibe, die sich unter Zwischenschaltung einer viskosen Flüssigkeit innerhalb einer Außenscheibe drehen kann, wobei die Innenscheibe mit der Achse 32 fest verbunden ist und sich mit dieser dreht, wenn die Kameraaufnahmeplatte 6 verschwenkt wird. Die Außenscheibe ist umfangsseitig mit Rastausnehmungen versehen, die hier nicht dargestellt sind. In diese Rastausnehmungen können Sperrelemente 35 bevorzugt federbelastet eingedreht werden. Dadurch gelangt das Dämpfungselement in Aktion, weil auslegerseitig die Außenscheibe festgehalten wird, wogegen sich die Innenscheibe mit der Achse 32 und somit mit der Kameraaufnahmeplatte 6 drehen kann, allerdings durch die viskose Flüssigkeit gedämpft. Wahlweise können eine oder zwei und bei Vorhandensein mehrerer Dämpfungselemente auch mehrere gemeinsam oder in verschiedenen Abstufungen zugeschaltet sein. Ist das Dämpfungselement 34 abgeschaltet, so dreht sich die Außenscheibe zusammen mit der Innenscheibe frei durch, ohne dass es zu einer Relativbewegung zwischen Innenscheibe und Außenscheibe und zu einer Dämpfungswirkung kommt.

Wenn der Kranausleger 2 im Raume verschwenkt wird und durch das Gewicht der Kamera auf der Kameraaufnahmeplatte 6 das Zugseil 9 wechselmäßig gedehnt wird, werden vom Zugseil 9 auf die Kameraaufnahmeplatte 6 und somit auf die Kamera Schwingungen übertragen, die es zu vermeiden gilt. Dies geschieht durch eine Entkoppelung dieser Schwingungen infolge der zuvor beschriebenen Dämpfung.

## Patentansprüche

1. Gerätekran, insbesondere Kamerakran, mit einer Kranstütze (1) und einem an einer ersten Anlenkstelle (3) schwenkbar daran angelenkten Kranausleger (2), an dessen Ende ein Geräteaufnahmeelement (6) an einer zweiten Anlenkstelle (5) angelenkt ist, an dem an einer dritten Anlenkstelle (10), die von der zweiten Anlenkstelle (5) beabstandet ist, ein Zugelement (9) angelenkt ist, das von dort zur Kranstütze (1) geführt ist und dort an einer vierten Anlenkstelle (11) angelenkt ist, **dadurch gekennzeichnet, dass** im Schwenkbereich des Geräteaufnahmeelements (6) und im Bereich der zweiten Anlenkstelle (5) eine Bewegungsdämpfungseinrichtung (34, 35) angeordnet ist, durch die die Schwenkbewegung des Geräteaufnahmeelements (6) um die zweite Anlenkstelle (5)dämpfbar ist.

2. Gerätekran nach Anspruch 1, **dadurch gekennzeichnet, dass** als Dämpfungseinrichtung mehrere Dämpfungselemente (34) vorhanden sind, die gezielt zu- beziehungsweise abschaltbar (35) sind.

3. Gerätekran nach Anspruch 1 oder 2, **dadurch gekennzeichnet, dass** mit einer Achse (32), über welche das Geräteaufnahmeelement (6, 30) am Ende des Kranauslegers (2) schwenkbar in diesem gelagert ist, Dämpfungsscheiben (34) verbunden sind, die jeweils aus einer an der Achse (32) befestigten Innenscheibe besteht, die unter Zwischenschaltung einer viskosen Flüssigkeit in einer Außenscheibe drehbar angeordnet ist, die auslegerseitig sperrbar ist.

## Claims

1. Equipment crane, in particular camera crane, having a crane support (1) and a crane jib (2) articulated pivotably thereto at a first articulation point (3), on the end of which an equipment-receiving element (6) is articulated at a second articulation point (5), at which a traction element (9) is articulated at a third articulation point (10), which is spaced from the second articulation point (5), which traction element (9) is guided from there to the crane support (1) and is articulated there at a fourth articulation point (11), **characterised in that** in the pivoting region of the equipment-receiving element (6) and in the region of the second articulation point (5), a movement-damping device (34, 35) is arranged, by means of which the pivoting movement of the equipment-receiving element (6) can be damped about the second articulation point (5).

2. Equipment crane according to claim 1, **characterised in that** several damping elements (34), which can be switched on or off (35) specifically, are present as the damping device.

3. Equipment crane according to claim 1 or 2, **characterised in that** damping discs (34), which consist in each case of an inner disc attached to the axis (32), which is arranged with interposition of a viscous liquid to be rotatable in an outer disc, which can be blocked on the jib side, are connected to an axis (32), via which the equipment-receiving element (6, 30) at the end of the crane jib (2) is mounted pivotably in the latter.

## Revendications

1. Grue d'appareil, en particulier, grue de caméra, avec un appui de grue (1) et un bras articulé de grue (2) susceptible de pivoter en un premier point d'articulation (3), articulé sur lui, à une extrémité duquel un élément support d'appareil (6) est articulé, en un deuxième point d'articulation (5) sur lequel, en un troisième point d'articulation (10), espacé du deuxième point d'articulation (5), est articulé un élément de traction (9), guidé de là vers l'appui de grue (1) et articulé à cet endroit en un quatrième point d'articulation (11), **caractérisée en ce que**, dans la plage de pivotement de l'élément support d'appareil (6) et dans la zone du deuxième point d'articulation (5), est disposé un dispositif d'amortissement de mouvement (34, 35), au moyen duquel le mouvement de pivotement de l'élément support d'appareil (6) autour du deuxième point d'articulation (5) est susceptible d'être amorti.

2. Grue d'appareil selon la revendication 1, **caractérisée en ce qu'**une pluralité d'éléments d'amortissement (34), susceptibles d'être raccordés ou isolés (35) à dessein, sont prévus en tant que dispositif d'amortissement.

3. Grue d'appareil selon la revendication 1 ou 2, **caractérisée en ce que**, à un axe (32), par l'intermédiaire duquel l'élément support d'appareil (6, 30) est monté à l'extrémité du bras articulé de grue (2), avec possibilité de pivotement dans celui-ci, sont reliés des disques d'amortissement (34), formés chacun d'un disque intérieur fixé à l'axe (32), disposé de façon à pouvoir tourner dans un disque extérieur avec interposition d'un liquide visqueux, le disque extérieur étant susceptible d'être bloqué côté bras articulé.
